Europäisches Patentamt

European Patent Office

Office européen des brevets

(19)

(11) Publication number: **0 096 667**

**A1**

(12)

# EUROPEAN PATENT APPLICATION

(21) Application number: **83850132.8**

(22) Date of filing: **17.05.83**

(51) Int. Cl.³: **E 02 B 3/02**

(30) Priority: **07.06.82 SE 8203502**

(43) Date of publication of application:
**21.12.83 Bulletin 83/51**

(84) Designated Contracting States:
**BE DE FR GB NL**

(71) Applicant: **Atlas Copco Aktiebolag**

**Nacka(SE)**

(72) Inventor: **Fors, Lars Börje Staffan**
**Planetariumlaan 207**
**B-2610 Wilrijk(BE)**

(72) Inventor: **Verner, Bo Lennart**
**Belgielei 127**
**B-2000 Antwerpen(BE)**

(74) Representative: **Grundfelt, Gunnar et al,**
**c/o Atlas Copco Aktiebolag Patent Department**
**S-105 23 Stockholm(SE)**

(54) **Method and device for moving sediment.**

(57) Method and device for moving sediment from the bottom (10) of a waterway exposed to tidal waters. The sediment is cut loose by the discs (2) of a disc cultivator. The sediment is then lifted towards the surface (11) of the waterway by means of an airlift pump (3).

Fig. 1

EP 0 096 667 A1

## Method and device for moving sediment

The present invention relates to a method and a device for moving sediment from the bottom of a waterway exposed to tidal waters.

A problem experienced in many waterways exposed to tidal waters is the accumulation of sediment. Such a waterway could for instance be an entrance canal from a river to a harbour basin. In order to allow boats to enter the basin the sediment must be removed every now and then to maintain a sufficient depth in the waterway.

According to prior art rakers comprising a beam provided with a number of pins are towed over the bottom of the waterway by tugboats in order to loosen the sediment. This is done during the outgoing tide. In this way the sediment is moved a distance by the tide before resedimentation occurs. This method is time-consuming, and thus costly, because the sediment is moved a short distance only after each raking. Furthermore, the pins are often caught by chains, wires and other debris on the bottom.

The present invention, which is defined by the appended claims, provides a more economical method in which the sediment is effectively lifted from the bottom of the waterway so that the tide will move the sediment a substantially longer distance for each passing of the tugboat. The number of passages by the tugboat can thus be considerably decreased.

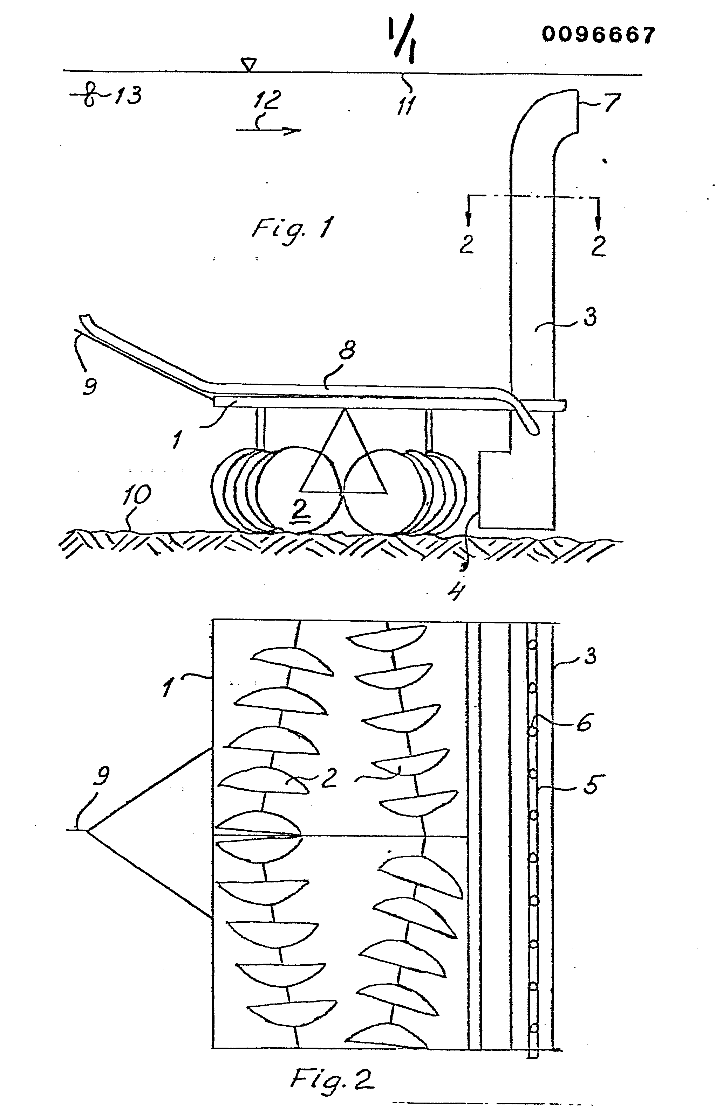

An example of the invention is described below with reference to the accompanying drawing in which fig 1 shows a device according to the invention from the side. Fig 2 shows the device from above sectioned according to 2-2

in fig 1.

The sediment moving device shown in the figs comprises a disc cultivator comprising a frame 1 and a number of bowl-shaped discs 2. The frame is provided with an air-lift pump 3. The inlet opening 4 of the air-lift pump is directed towards the discs 2. The outlet opening 7 of the air-lift pump may be directed as shown in the drawing, in the opposite direction or upwards. The direction should be the same as the direction 12 of the outgoing tide if directed sideways. The air-lift pump 3 is provided with a supply tube 5 for compressed air. Tube 5 has a number of exit holes 6 for the compressed air, which is delivered to tube 5 through a conduit 8. The device is towed below the water surface 11 on the bottom 10 of the waterway by a tugboat, symbolically represented by its propeller 13. A towline 9 connects the device to the tugboat. Conduit 8 follows towline 9 to the tugboat where a compressor feeds compressed air into conduit 8. When towing the device against the outgoing tide as shown in the drawing the downstream movement of sediment is augmented by the slipstream of propeller 13.

The method of the invention is performed in the following way. The device shown in the drawing is towed over the bottom 10 of the waterway during the passing out of the tide. Sediment accumulated on the bottom is cut loose by the discs 2 of the disc cultivator. The cut loose sediment is then lifted towards the surface 11 by the air-lift pump 3 whose pumping action is caused by the rising air bubbles introduced through the exit holes 6. The upwards waterflow, containing sediment, is then either directed in the direction 12 of the outgoing tide or let out upwards.

3

Claims :

1.    A method of moving sediment from the bottom
of a waterway exposed to tidal waters, c h a r a c t e r -
i z e d   i n   that the sediment is cut loose from the
bottom of the waterway during the passing out of the tide
and that the cut loose sediment is lifted towards the surface of the waterway by means of an air-lift pump.

2.    A device for moving sediment from the bottom of
a waterway exposed to tidal waters comprising means (2)
for cutting loose the sediment from the bottom (10) ,
c h a r a c t e r i z e d   i n   that said means comprises
a disc cultivator (1,2) and that an air-lift pump (3)
is mounted on the disc cultivator, said air-lift pump
having an inlet opening (4) being directed towards the
discs (2) of said disc cultivator.

0096667

Fig. 1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-1 939 389 (M.M. CONDRON) * Page 1, lines 4-13; page 1, line 95 - page 2, line 50; figure 1 * | 1,2 | E 02 B 3/02 |
| Y | FR-A-2 304 391 (ATLAS COPCO) * Page 1, line 38 - page 2, line 18; figure 1 * | 1,2 | |
| A | FR-A-2 356 775 (AEROWATT-ETUDES) * Page 2, lines 16-36; figures 1,2 * | 1,2 | |

**TECHNICAL FIELDS SEARCHED (Int. Cl. ³)**

E 02 B
E 02 F

The present search report has been drawn up for all claims

| Place of search | Date of completion of the search | Examiner |
|---|---|---|
| THE HAGUE | 18-07-1983 | CLASING M.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82